## Europäisches Patentamt

## European Patent Office

## Office européen des brevets

(11) Veröffentlichungsnummer: **0 315 277**
**A1**

(12) **EUROPÄISCHE PATENTANMELDUNG**

(21) Anmeldenummer: 88202446.6

(22) Anmeldetag: 01.11.88

(51) Int. Cl.⁴: **G01N 1/04 , B23B 51/04**

(30) Priorität: 02.11.87 NL 8702611

(43) Veröffentlichungstag der Anmeldung:
**10.05.89 Patentblatt 89/19**

(84) Benannte Vertragsstaaten:
**AT BE CH DE ES FR GB GR IT LI LU NL SE**

(71) Anmelder: **GEMEENTE ROTTERDAM,
GEMEENTEWERKEN, BEHEER EN
ONDERHOUD KUNSTWERKEN/CWP
Galvanistraat 15
NL-3002 AP Rotterdam(NL)**

(72) Erfinder: **Winterswijk, Herman
Thelonius Monkpad 6
NL-3069 PW Rotterdam(NL)**

(74) Vertreter: **den Boer, Jan Johannes, Ir. et al
Octrooibureau Polak & Charlouis Laan
Copes van Cattenburch 80
NL-2585 GD The Hague(NL)**

(54) **Verfahren und Vorrichtung zur Prüfung von erdverlegten Kanalisationsrohren aus Beton.**

(57) Erdverlegte Kanalisationsrohre sind für Überprüfung ihres Zustandes schwer erreichbar. Es wird vorgeschlagen, einen Schacht kleinen Durchmessers zu bohren, in diesen einen Kernbohrer einzuführen und einen Kern aus dem Rohr auszubohren. Dadurch daß vorher mit einem an einer Stange befestigten Zentrierbohrer ein Zentrierloch in den Kern gebohrt wird und darin ein Spreizdübel mittels der Kernbohrerstange fixiert wird, wird beim Zurückziehen des Bohrers auch der Kern nach oben gebracht. Mittels eines Führungskörpers an der Bohrerstange und eines federnden Elements mit Lippen innerhalb des hohlen Kernbohrers nimmt die Bohrerstange beim Rückholen auch den Dübel mit dem Kern mit.

FIG. 1ᶠ

**Verfahren und Vorrichtung zur Prüfung von erdverlegten Kanalisationsrohren aus Beton**

Die Erfindung betrifft ein Verfahren zur Prüfung von erdverlegten Kanalisationsrohren aus Beton.

Kanalisationsrohre werden bis jetzt in verschiedener Weise auf ihren Zustand hin überprüft, wobei es insbesondere um die Feststellung des Oberflächenzustandes, von Löchern, Porosität oder chemischer Korrosion geht. So ist es bekannt, die Rohre optisch vor Ort zu inspizieren.

Dies setzt eine geeignete Bekleidung und das Tragen einer Gasmaske voraus. Abgesehen von der Tatsache, daß Rohre unterhalb eines bestimmten Durchmessers nicht in dieser Weise inspiziert werden können und diese Arbeit äußerst unangenehm ist, ist es auf diese Weise nicht möglich, einen Prüfkörper aus dem Betonrohr zu entnehmen, um diesen in einem Laboratorium untersuchen zu lassen.

Ein anderes Verfahren bedient sich eines durch das Rohr bewegten Prüfgerätes, eines sogenannten Molchs, auf welchem eine Video-Einrichtung montiert ist, deren Signale zu einem sich in der Nähe befindenden Molch mit Auswerteeinrichtung weitergeleitet werden. Auch hiermit ist ausschließlich eine optische Prüfung möglich und zudem sind die notwendigen Apparaturen kostenaufwendig.

Schließlich ist es bekannt, einen Abschnitt des Rohrs durch Ausheben des Bodenmaterials freizulegen, um eine Prüfung von außen durchführen zu können und, wenn nötig, einen Prüfkörper aus dem Rohr auszubohren. Der Nachteil ist, daß erhebliche Aushubarbeiten notwendig sind, der Aushub in der Nähe gelagert werden muß und bei Kanalisationen unterhalb von Verkehrswegen ziemlich langfristige Absperrungen mit entsprechender Verkehrsbehinderung erforderlich sind.

Die Erfindung bezweckt die Beseitigung der vorgenannten Nachteile und die Schaffung eines preiswerten und schnellen Verfahrens und einer einfachen Vorrichtung zur Prüfung von Kanalisationsrohren.

Dies wird erfindungsgemäß erreicht durch folgende Verfahrensschritte: Bohren eines Schachtes bis zum Kanalisationsrohr, Anordnen eines Führungsrohrs in dem Schacht, Absaugen des Materials innerhalb des Führungsrohrs, Bohren eines Zentrierlochs im Kanalisationsrohr, Einsetzen eines lösbaren Dübels in dem Zentrierloch, welcher am unteren Ende einer Stange angeschraubt ist, auf welcher ein zylindrischer Körper mit breiterem Kopf oberhalb des Dübels lose angeordnet ist, Ausbohren eines Kerns aus dem Kanalisationsrohr mittels eines hohlen Bohrers und Festhalten des ausgebohrten Kerns mit, um den angeordneten Dübel an geordneten Kernhaltemitteln sowie Ziehen des Bohrers mit dem Zylinder und dem Kern aus dem Schacht.

Es ist zwar aus der EP-A-0 058 517 ein Verfahren und eine Vorrichtung zum Bohren eines Loches in eine Polyethänverkleidung eines Kanalisationsrohrs aus Beton bekannt, um ein Abzweigrohr an dieses Rohr anschließen zu können, doch wird hierbei ein breiter Schacht mit einem Durchmesser von ungefähr 0,5 m bis auf das Kanalisationsrohr gebohrt und darauf mittels eines hohlen Bohrers, der mit Kernhaltemitteln versehen ist, ein Kern aus dem Rohr herausgebohrt, doch sind in dem Schacht Bretter anzuordnen, an denen Kolben-Zylindervorrichtungen zum Andrücken einer kurzen Bohrbüchse gegen das Rohr abzustützen sind. Die Bohrbüchse ist von Säulen oder Führungsstangen gestützt, an denen eine Brücke zur Führung des Bohrers bewegt wird. Ein Bohren durch einen Schacht hindurch, welcher einen Durchmesser aufweist, der nicht größer ist als jener des Bohrers, ist hiermit nicht möglich.

Vorzugsweise wird beim erfindungsgemäßen Verfahren nach dem Ziehen des Kerns aus dem Kanalisationsrohr in das gebohrte Loch durch den Schacht hindurch ein Dichtungsstopfen aus Gummi oder Kunststoff gesetzt.

Der Vorteil des neuen Verfahrens ist der, daß der Erdaushub auf das absolut notwendige Minimum beschränkt wird, Verkehrswege nicht abgesperrt werden müssen und daß man ohne Zutritt zum Innern des Rohrs einen Prüfkörper erhält, der hinsichtlich aller gewünschten Parameter untersucht werden kann.

Die Erfindung umfaßt auch eine Vorrichtung zur Durchführung des Verfahrens.

Diese Vorrichtung ist gekennzeichnet durch eine Gewindestange, auf deren unteren Ende ein Dübel, z. B. ein Spreizdübel aufschraubbar ist, während lose auf der Stange oberhalb des Dübels zwischen axialen Anschlägen an der Stange ein zylindrischer Körper angeordnet ist, welcher am oberen Ende einen breiteren Kopf aufweist, dessen Oberseite als Einführteil für den Bohrer allmählich in Durchmesser zunehmend, z. B. halbkugelig oder konisch, ausgeführt ist.

Vorzugsweise ist vorgesehen, daß das Einführteil des zylindrischen Körpers über eine nach innen verlaufende Schulter in den unteren Teil dieses Körpers übergeht und daß innerhalb des hohlen Bohrers eine Büchse aus federndem Werkstoff vorgesehen ist, die einen axialen, sich über deren ganze Länge erstreckenden Schlitz aufweist, und in der Nähe der Schneidkante des Bohrers, axial in einem Abstand darüber liegend, mit einer Anzahl regelmäßig über den Umfang verteilter federnder Lippen versehen ist, welche den ausgebohrten Kern festhalten.

Die Erfindung ist nachstehend anhand der Zeichnung erläutert. In der Zeichnung zeigen:

Figur 1a - 1f den Verfahrensablauf in schematischer Darstellung,

Figur 2 einen Längsschnitt durch die Stange mit Dübel und zylindrischem Körper;

Figur 3 eine Ansicht der Kernhaltemittel;

Figur 4 den Bohrer mit den Kernhaltemitteln und dem zylindrischen Körper.

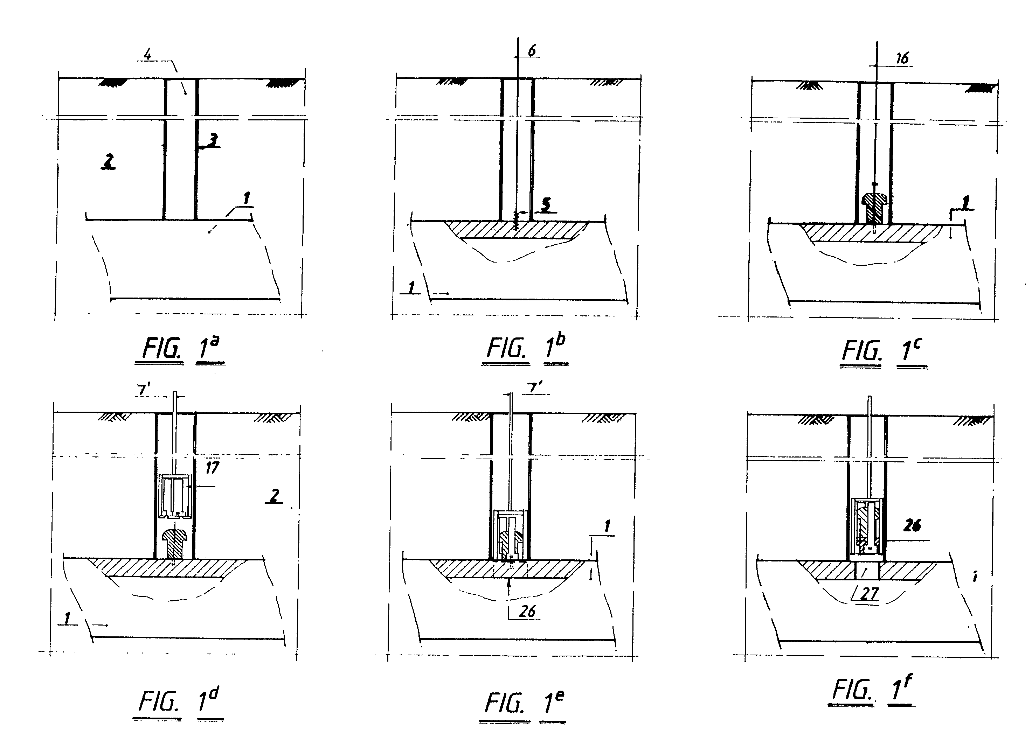

In Figur 1a ist ein Abschnitt eines Kanalisationsrohrs 1 dargestellt, das im Boden 2 in einer Tiefe von beispielsweise 2 bis 4 m verlegt ist. Soll der Zustand des Kanalisationsrohrs geprüft werden, geht man beim erfindungsgemäßen Verfahren wie folgt vor. Je nach dem, ob der Boden ausschließlich aus Sand oder Erde oder auch Gestein besteht, wird oberhalb des Kanalisationsrohrs mittels eines Erdbohrers oder eines anderen Bohrers ein Schacht 3 gebohrt. Die Ortung des Kanalisationsrohrs ist im allgemeinen leicht möglich, da das Rohr in der Regel linear zwischen zwei Sinkkästen verläuft, die an der Oberfläche sichtbar sind. Daraufhin wird in den Schacht 3 ein Führungsrohr 4 eingesetzt, dessen Durchmesser ungefähr dem des Schachts entspricht. Danach wird mittels eines nicht dargestellten Rohrs, das mit einer Saugpumpe verbunden ist, der Innenraum des Rohrs 4 leergesaugt und dadurch die Oberseite des Kanalisationsrohrs 1 am unteren Ende des Führungsrohrs 4 freigelegt.

Gemäß Figur 1b wird nunmehr mittels eines Bohrers 5, der am unteren Ende einer langen Bohrstange 6 montiert ist, ein Zentrierloch in das Rohr 1 gebohrt, das dazu bestimmt ist, einen Dübel aufzunehmen.

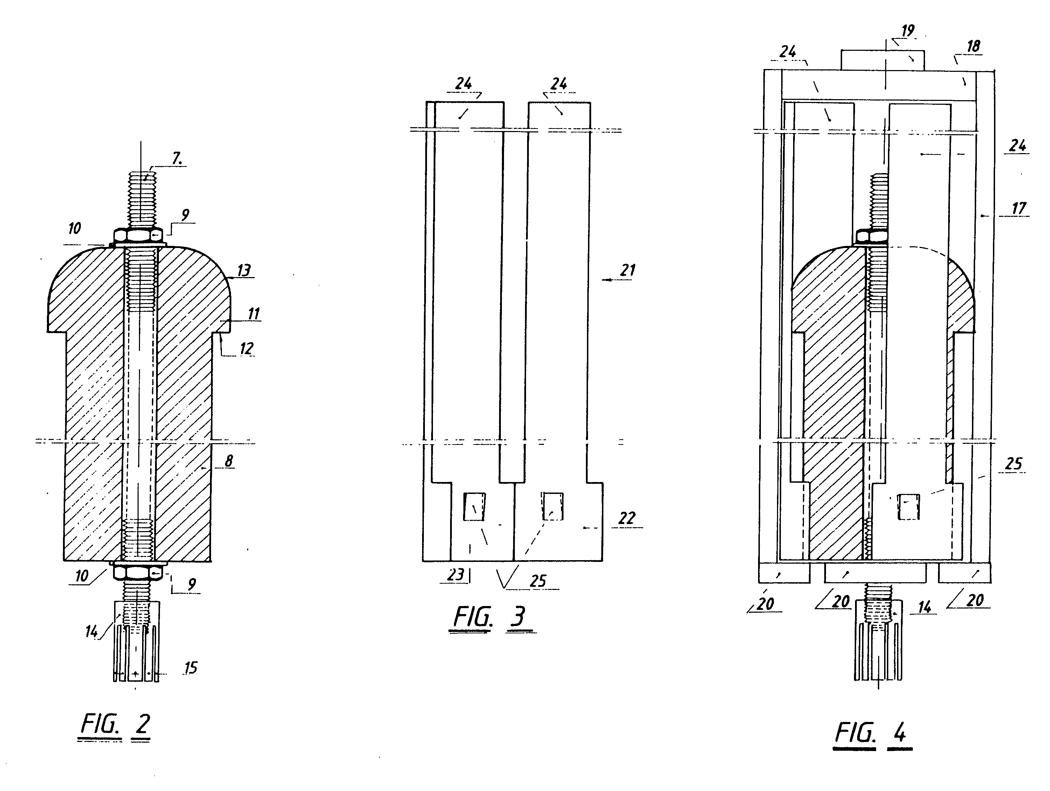

Zu diesem Zweck ist zunächst auf Figur 2 einzugehen. Diese zeigt eine Gewindestange 7 auf der ein zylindrischer Körper 8 lose angeordnet ist. Der Körper 8 ist axial auf der Stange 7 mittels Anschlägen, z. B. mittels der dargestellten Muttern 9 und Unterlagscheiben 10, festgelegt. Der Körper 8 weist einen Kopf 11 mit einem größeren Durchmesser auf, der gegenüber dem übrigen Teil über eine Schulter 12 abgesetzt ist. Die Oberseite des Kopfs 11 ist in Figur 2 in Form einer Kugelkalotte ausgebildet. Der kugelkalottenartige Teil 13 dient als Einführteil für den Bohrer, wie später noch erläutert wird. Das Einführteil könnte auch eine andere als die dargestellte Kugelkalottenform aufweisen, z. B. konisch sein. In jedem Fall soll der Durchmesser von der Oberseite des Kopfs zum zylindrischen Teil des Kopfes 11 allmählich zunehmen.

Am unteren Ende der Gewindestange 7 ist ein Dübel 14 aufgeschraubt. Dieser kann aus Metall, z.

B. Messing, bestehen und am unteren Ende mit einer Anzahl von Einschnitten 15 nach Art eines Spreizdübels versehen sein.

Nunmehr wird auf Figur 1c eingegangen. Dort ist gezeigt, wie die soeben beschriebenen Bauteile am unteren Ende einer Stange 16 befestigt sind. Das untere Ende der Stange 16 ist z. B. mittels einer nicht dargestellten Mutter mit dem oberen Ende der Gewindestange 7 verbunden. Wird nun die Stange 16 abgesenkt, so kann der Dübel 14 in das vom Bohrer 5 gebildete Zentrierloch im Kanalisationsrohr eingesetzt werden. Der Durchmesser des Zentrierlochs ist derart gewählt, daß der Dübel darin einen Widerstand vorfindet, so daß beim Drehen der Stange 16 um ihre Achse das untere Ende der Stange 7 weiter in den Dübel 14 nach unten eindringt und dabei in den Bereich mit den Einschnitten 15 gelangt, so daß die dazwischen befindlichen Zungen gespreizt werden und der Dübel 14 im Kanalisationsrohr 1 verankert wird.

Nachfolgend wird der Bohrer gemäß Figur 4 beschrieben. Dieser Bohrer besteht aus einem hohlen Bohrzylinder 17, der an der Oberseite mittels einer oberen Wand 18 abgeschlossen ist, die ein Befestigungselement 19 aufweist, mittels dessen der Bohrer am unteren Ende einer Bohrstange 7′ - (Figuren 1d bis 1f) befestigt werden kann. Am unteren Ende weist der Bohrzylinder 17 Schneidwerkzeuge 20, vorzugsweise aus Diamant, auf, mittels der es durch Rotation des Bohrers möglich ist, einen Kern aus dem Rohr 1 auszubohren.

In seinem Innern trägt der Bohrzylinder 17 ein Halteelement 24 aus federndem Werkstoff, z. B. Federstahl, das im wesentlichen zylindrisch ist und einen unteren Ring 22 (Figur 3) aufweist, der einen axialen Schlitz 23 und sich nach oben erstreckende Federarme 24 aufweist. An der Innenseite des Rings 22 sind, gleichmäßig über den Umfang verteilt, eine Anzahl nach innen ragender federnder Lippen 25 vorgesehen, die aus dem Ringwerkstoff ausgestanzt sind. Durch deren Federkraft liegt das Element 21 nach Anordnung innerhalb des Bohrzylinders 17 gegen dessen Innenwand an.

Ausgehend von Figur 1c wird erst die Stange 16 von der Gewindestange 7 getrennt. Dies ist möglich ohne dabei die Gewindestange 7 wieder aus dem im Rohr 1 angeordneten Dübel herauszudrehen, wenn man dafür Sorge trägt, daß die Schraubverbindung mit der Stange 16 leichter drehbar ist als die zwischen der Stange 7 und dem Dübel. Dies wird durch eine spezielle Art von Gewinde oder durch Anordnung von Fett in der Schraubverbindung ermöglicht.

Gemäß Figur 1d wird nun der Bohrzylinder 17 an seiner Bohrstange 7′ in das Rohr 4 abgesenkt. Bei dieser Bewegung wird das federnde Element 21 über das Einführteil 13 des Körpers 8 diesen Teil passieren. Nachdem die federnden Lippen 25 die Schulter 12 passiert haben, federn sie zurück, so daß die Schulter 12 einen vertikalen Anschlag für das Element 21 bildet. Die Schneidwerkzeuge 20 des Bohrers liegen niedriger als das untere Ende des Elementes 21 und bohren den Kern 26 aus dem Rohr 1 heraus. Während des Bohrens bewegt sich das Element 21 um den Kern herum mit nach unten, da die obere Wand 18 einen Anschlag für die Federarme 24 bildet und werden die federnden Lippen 25 vom Kern federnd zurückgedrückt, so daß sie fest an dem Kern 26 anliegen und ihn festhalten. Wird nunmehr die Bohrstange 7' nach oben zurückgezogen, dann wird der Kern 26 im Bohrer festgehalten und kann durch Losdrehen des Dübels 14 von der Gewindestange gelöst werden.

Das im Rohr 1 erzeugte Loch 27 kann mittels eines nicht dargestellten Stopfens aus Gummi oder Kunststoff verschlossen werden.

Es leuchtet ein, daß über die Federarme 24 des Elementes 21, die an der Innenwand des Bohrzylinders 17 anliegen, beim Zurückziehen des Bohrers mittels der federnden Lippen 25 der Kern und über den Dübel 14 und die Gewindestange 7 auch der zylindrische Körper 8 mitgenommen werden.

## Ansprüche

1. Verfahren zum Ausbohren eines Prüfkörpers in Form eines Kerns aus einem erdverlegten Kanalisationsrohr, indem ein bis zum Kanalisationsrohr reichender Schacht gebildet und daraufhin mittels eines hohlen Bohrers der Kern aus dem Kanalisationsrohr ausgebohrt und der Kern mit Haltemitteln festgehalten wird, dadurch gekennzeichnet, daß der Schacht gebohrt und durch ein Führungsrohr, dessen Innendurchmesser etwa demjenigen des hohlen Bohrers entspricht, ausgekleidet wird, daß der Raum innerhalb des Führungsrohrs leergesaugt wird, daß anschließend in das Kanalisationsrohr in der Achse des auszubohrenden Kerns ein Zentrierloch gebohrt, daß in diesem Zentrierloch ein lösbarer Dübel mittels einer Stange eingesetzt und zugleich ein auf der Stange lose sitzender zylindrischer Körper mit breiterem Kopf unmittelbar oberhalb des Dübels auf das Kanalisationsrohr aufgesetzt wird, und daß nach dem Ausbohren des Kerns um den Dübel herum der Bohrer mit dem zylindrischen Körper und dem Kern aus dem Schacht gezogen werden.

2. Verfahren nach Anspruch 1, dadurch gekennzeichnet, daß nach dem Ausbohren und Ziehen des Kerns in das vom Kern hinterlassene Loch durch das Führungsrohr ein Dichtstopfen aus Gummi oder Kunststoff eingesetzt wird.

3. Vorrichtung zur Durchführung des Verfahrens nach Anspruch 1 oder 2, gekennzeichnet durch eine Gewindestange (7), auf deren unteren Ende ein Dübel, z. B. ein Spreizdübel (14), aufschraubbar ist, während lose auf der Stange oberhalb des Dübels zwischen axialen Anschlägen (9, 10) an der Stange ein zylindrischer Körper (8) angeordnet ist, welcher am oberen Ende einen breiteren Kopf (11) aufweist, dessen Oberseite als Einführteil (13) für den Bohrer (17) allmählich in Durchmesser zunehmend, z. B. halbkugelig oder konisch, ausgeführt ist.

4. Vorrichtung nach Anspruch 3, dadurch gekennzeichnet, daß das Einführteil (13) des zylindrischen Körpers (8) über eine nach innen Verlaufende Schulter (12) in den unteren Teil dieses Körpers übergeht und daß innerhalb des hohlen Bohrers (17) eine Büchse (21) aus federndem Werkstoff vorgesehen ist, die einen axialen, sich über deren ganze Länge erstreckenden Schlitz (23) aufweist, und in der Nähe der Schneidkante (20) des Bohrers, axial in einem Abstand darüber liegend, mit einer Anzahl regelmäßig über den Umfang verteilter federnder Lippen (25) versehen ist, welche den ausgebohrten Kern (26) festhalten.

FIG. 1ª

FIG. 1ᵇ

FIG. 1ᶜ

FIG. 1ᵈ

FIG. 1ᵉ

FIG. 1ᶠ

EP 0 315 277 A1

FIG. 4

FIG. 3

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | EP-A-0 058 517 (I.R. YARNELL) <br> * Seite 5, Zeile 25 - Seite 6, Zeile 20; Seite 10, Zeile 21 - Seite 11, Zeile 10; Figuren 1,4 * <br> --- | 1 | G 01 N 1/04 <br> B 23 B 51/04 |
| Y | US-A-3 136 376 (E.J. ROBINSKY) <br> * Spalte 2, Zeilen 12-64; Figur 3 * <br> --- | 1 | |
| A | GB-A- 451 950 (S. CUTLER) <br> * Seite 4, Zeilen 87-90; Figur 1 * <br> --- | 1 | |
| A | US-A-3 922 107 (D.W. FOWLER) <br> * Spalte 8, Zeilen 46-62; Figuren 1,2 * <br> --- | 1 | |
| A | US-A-1 397 541 (J.W. OWENS) <br> * seite 4, Zeilen 60-65,86-96 * <br> ----- | 1,2 | |

RECHERCHIERTE SACHGEBIETE (Int. Cl.4)

G 01 N
B 23 B
E 02 D

Der vorliegende Recherchenbericht wurde für alle Patentansprüche erstellt

| Recherchenort | Abschlußdatum der Recherche | Prüfer |
|---|---|---|
| DEN HAAG | 06-02-1989 | ANTHONY R.G. |